# EUROPÄISCHE PATENTSCHRIFT

(11) **EP 0 478 585 B1**
(45) Veröffentlichungstag und Bekanntmachung des Hinweises auf die Patenterteilung: **08.09.1993**
(21) Anmeldenummer: 90908495.6
(22) Anmeldetag: 02.06.1990
(51) Int. Cl.: D06H 7/06, D06H 7/02, B65H 23/02

(54) **VORRICHTUNG ZUM SEITLICHEN ABTASTEN VON FLORLOSEN ZONEN AN TUCHBAHEN, INBESONDERE FROTTEEWARE**
DEVICE FOR THE LATERAL SCANNING OF NAPLESS AREAS OF FABRIC WEBS, ESPECIALLY SPONGE CLOTHS
DISPOSITIF POUR LE BALAYAGE LATERAL DE ZONES SANS FILS DE POIL SUR DES BANDES DE TISSU, EN PARTICULIER SUR DU TISSU-EPONGE

(30) Priorität: 22.06.1989 DE 8907659 U
(43) Veröffentlichungstag der Anmeldung: 08.04.1992
(73) Patentinhaber: CARL SCHMALE GMBH & CO. KG, D-48607 Ochtrup (DE)
(72) Erfinder: BENDER, Dieter, D-4434 Ochtrup (DE)
(74) Vertreter: Patentanwälte Dipl.-Ing. Conrad Köchling Dipl.-Ing. Conrad-Joachim Köchling
(86) Internationale Anmeldenummer: DE9000430
(87) Internationale Veröffentlichungsnummer: WO9015896

(56) Entgegenhaltungen:
- DE-A- 2 059 637
- DE-A- 2 729 352
- DE-C- 3 412 385

## Beschreibung

Die Erfindung betrifft eine Vorrichtung gemäß Oberbegriff des Anspruches 1.

Eine solche Vorrichtung ist aus der DE-A-20 59 637 bekannt. Diese zeigt eine Vorrichtung zum seitlichen Abtasten der Florkanten bei Teppichen oder ähnlichen Geweben mit in das Grundgewebe eingezogenem Flor bzw. getufteten Nadelfilz, die mit Fotodetektoren, bestehend aus Sender und Empfänger, arbeitet, wobei die Abtastschalen tangential zu einer Umlenkrolle gerichtet sind, über welche die Tuchbahn geleitet wird.
Dabei ist ein winkelförmiger Rahmen vorgesehen, der gabelförmig beiderseits der Florkante die Sender und Empfänger trägt, wobei je ein Sender und ein Empfänger auf jedem der beiden Schenkel des Rahmens angebracht sind.
Zwischen Sender und Empfänger entstehen zwei, sich in stumpfen Winkel kreuzende Lichtstrahlen.

Eine seitliche Störung des Strahlenwegs bewirkt eine Korrektur an der laufenden Textilbahn öder an dem in der Vorrichtung aufgehängten Schneidmesser.
Ein höhenverstellbarer Gleitschuh, der auf dem Flor gleitet, soll für den richtigen Abstand der Vorrichtung von der Umlenkrolle sorgen.

Obwohl der Aufbau der Vorrichtung verhältnismäßig kompliziert ist, läßt sich keine große Genauigkeit und auch keine hohe Arbeitsgeschwindigkeit erreichen.

Bei quer zur Längsrichtung der Textilbahn verlaufenden florlosen Zonen und auch bei Frotteeware, wie Handtüchern, läßt sich die bekannte Vorrichtung nicht verwenden.

Hiervon ausgehend liegt der Erfindung die Aufgabe zugrunde, eine gattungsgemäße Vorrichtung dahingehend zu verbessern, daß eine große Genauigkeit und Zuverlässigkeit auch bei hohen Bahngeschwindigkeiten selbsttätig erreichbar ist, wobei ein verhältnismäßig einfacher Aufbau gewährleistet ist und die Vorrichtung auch bei Tuchbahnen mit quer zur Längsrichtung verlaufenden florlosen Zonen einsetzbar ist.

Zur Lösung dieser Aufgabe dienen die im Hauptanspruch gekennzeichneten Merkmale.
Die Unteransprüche enthalten zweckmäßige weitere Ausbildungen.

Die erfindungsgemäße Vorrichtung arbeitet als optische Florabtastung und zeichnet sich durch einen sehr einfachen Aufbau aus, wobei einehohe Zuverlässigkeit erzielt wird. Die Anlage arbeitet im wesentlichen wartungsfrei und mit einem relativ geringen Aufwand. Die durch die Vorrichtung erhaltenen Signale werden in der vorhandenen Maschinensteuerung ausgewertet.

In der Zeichnungist ein Ausführungsbeispiel der erfindungsgemäßen Vorrichtung dargestellt.

Es zeigen:
- Fig. 1: Eine seitliche Ansicht, quer zur Laufrichtung der Tuchbahn;
- Fig. 2: Eine Ansicht der Vorrichtung nach Fig. 1 in Pfeilrichtung 14.

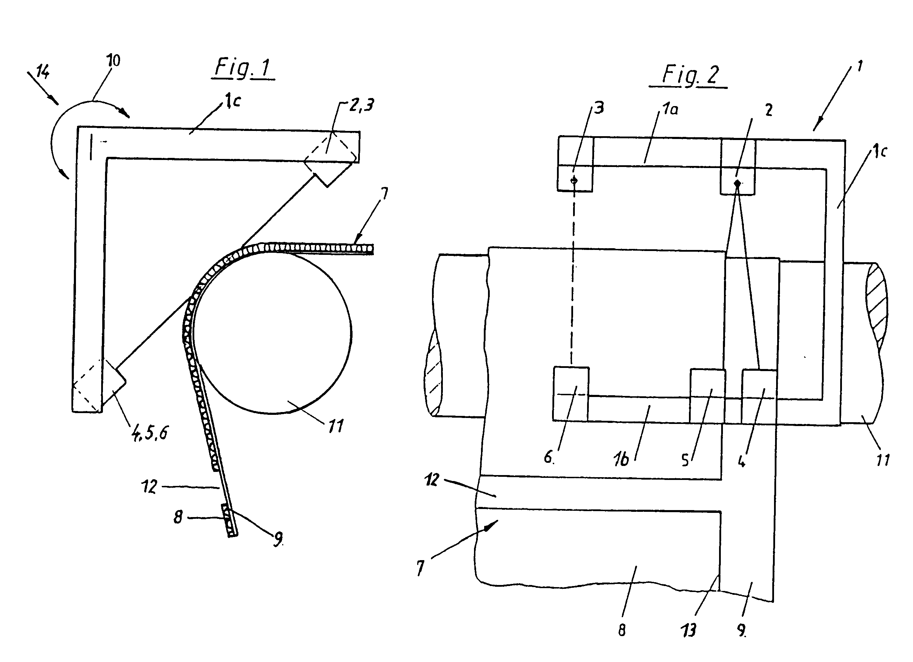

In Fig. 1 erkennt man die Tuchbahn 7, die um eine Umlenkrolle 11 geführt ist. In der Tuchbahn 7 aus z.B. Frotteeware sind florlose Zonen 9, 12 zwischen den Florzonen 8 enthalten. Die Umlenkung der Tuchbahn 7 erfolgt in einem Winkel von zweckmäßig unter 90°, derart, daß an die florlosen Zonen 9 bzw. 12 eine Tangente angelegt werden kann.

Das Abtasten der florlosen Zone 9, also der seitlich an der Kante der Tuchbahn 7 verlaufenden florlosen Zone erfolgt mittels Fotodetektoren 2-6, die aus Sender und Empfänger bestehen und auf einem Rahmen 1 angebracht sind. Auf einem Schenkel 1a des Rahmens 1 sind Sender 2, 3 und auf einem Schenkel 1b die Empfänger 4-6 montiert. Der Sender 2 arbeitet mit den Empfängern 4, 5 auf dem Schenkel 1b zum Abtasten der Florkante 13 der florlosen Zone 9 zusammen, während der Sender 3 mit dem Empfänger 6 zum Abtasten der Kanten der florlosen Zone 12 quer zur Tuchbahn 7 zusammenarbeitet.

Der Rahmen 1 ist um eine Achse, die durch die Verbindung 1c der beiden Schenkel 1a, 1b geht, in Pfeilrichtung 10 schwenkbar.

Weiterhin ist der Rahmen in Pfeilrichtung 14 und entgegengesetzt der Pfeilrichtung 14 verschiebbar. Hierdurch ist die Empfindllichkeit der Anlage einstellbar. Ein Schwenken des Rahmens 1 in Pfeilrichtung 10 ändert den Abstand zwischen dem Sender 2 und der Abtaststelle und somit auch die Breite des, wie in Fig. 1 angedeuteten, fächerförmigen Signals. Die Breite des Signalfächers an der Abtaststelle ist ein Maß für die Empfindlichkeit der Anlage.

Die Einstellmöglichkeiten sind ebenfalls für die Anpassung der Anlage an verschiedene Tuchbahndicken notwendig.

Der Sender 2 gibt, wie in Fig. 1 angedeutet, ein fächerförmiges Signal ab, das je nach Lage der Florkante 13 der florlosen Zone 9 längs der Tuchbahn 7 den Empfänger 4 allein, die Empfänger 4, 5 zusammen oder keinen der Empfänger 4, 5 trifft. Jedes der drei möglichen Signale wird in einer Steuerung ausgewertet, die in der Textilmaschine vorhanden ist und ein Stellglied der Maschine beaufschlagt.

Wenn der Sender 3 und der Empfänger 6 im Bereich der florlosen Zone 12 miteinander in Kontakt stehen, wird die Abtastung der Florkante 13 der florlosen Zone 9 abgeschaltet.

## Patentansprüche

1. Vorrichtung zum seitlichen Abtasten von florlosen Zonen an Tuchbahnen, insbesondere Frotteeware, in einer Textilmaschine, bei der die Tuchbahn (7) im Bereich der Abtastvorrichtung über eine Umlenkrolle (11) läuft, das Abtasten der florlosen Zonen (9,12) der Tuchbahn (7) mittels Fotodetektoren (2-6), bestehend aus Sender und Empfänger, erfolgt, die auf einem gelenkig aufgehängten, winkelförmigen Rahmen (1) befestigt sind, der Mittel zur Einstellung seines Abstandes gegenüber der Umlenkrolle (11) bzw. dem Grundgewebe der florlosen Zone (9,12) besitzt und wobei die Abtaststrahlen tangential zur Umlenkrolle (11) und damit zur Tuchbahn (7) an deren Umlenkstelle gerichtet sind, **dadurch gekennzeichnet**, daß auf einem ersten Schenkel (1a) des winkelförmigen Rahmens (1) zwei Sender (2 3) und auf dem anderen, zweiten Schenkel (1b) des winkelförmigen Rahmens (1) drei Empfänger (4,5,6) angeordnet sind, wobei der erste Sender (2) mit den ersten zwei Empfängern (4,5) zum Abtasten der längslaufenden Florkante (13) der florlosen Zone (9) und der zweite Sender (3) mit dem dritten Empfänger (6) zum Abtasten der kanten der florlosen Zone (12) quer zur Tuchbahn (7) dient.

2. Vorrichtung nach Anspruch 1, **dadurch gekennzeichnet**, daß der Rahmen (1) aus zwei, etwa rechtwinklig starr miteinander verbundenen Schenkeln (1c) besteht und um eine durch die Verbindungsstelle der beiden Schenkel (1c) gehende, parallel zur Achse der Umlenkrolle (11) verlaufende Achse (16) schwenkbar ist und daß an den freien Enden der beiden Schenkel (1c) die beiden ersten und zweiten Schenkel (1a,1b,) freitragend befestigt sind.

3. Vorrichtung nach Anspruch 1 oder 2, **dadurch gekennzeichnet**, daß die Mittel zur Einstellung des Abstandes des Rahmens (1) gegenüber der Umlenkrolle (11) bzw. dem Grundgewebe und damit zur Einstellung der Empfindlichkeit der Anlage aus einer in Richtung auf die Achse der Umlenkrolle (11) wirkenden Zustellvorrichtung bestehen.

4. Vorrichtung nach einem der Ansprüche 1 bis 3, **dadurch gekennzeichnet** daß, der erste Sender (2) ein fächerförmiges Signal abgibt, das je nach Lage der Florkante (13) der florlosen Zone (9) längs der Tuchbahn (7) den ersten Empfänger (4) allein, die ersten zwei Empfänger (4) und (5) zusammen oder keinen der ersten zwei Empfänger (4,5) trifft.

5. Vorrichtung nach Anspruch 4, **dadurch gekennzeichnet**, daß die drei möglichen Signale in einer Steuerung auswertbar sind, die ein Stellglied der Textilmaschine beaufschlagt.

6. Vorrichtung nach einem der Ansprüche 1 bis 5, **dadurch gekennzeichnet**, daß der zweite Sender (3) und der dritte Empfänger (6) im Bereich der florlosen Zone (12) miteinander in Kontakt stehen und dabei die Abtastung der Florkante (13) abschalten.

## Claims

1. A device for the lateral scanning of napless areas of fabric webs, more particularly sponge cloths, in a textile machine, wherein the fabric web (7) runs in the zone of the scanning device over a deflecting roller (11), the scanning of the napless areas (9, 12) of the fabric web (7) being performed by means of photodetectors (2-6), comprising a transmitter and a receiver, attached to a pivotably suspended angle-shaped frame (1) having means for adjusting its distance from the deflecting roller (11) and the ground texture of the napless zones (9, 12), the scanning rays being directed tangentially to the deflecting roller (11) and therefore to the fabric web (7) at its place of deflection, **characterised in that** disposed on the first arm (1a) of the angle-shaped frame (1) are two transmitters (2, 3), three transmitters (4, 5, 6) being disposed on the other, second arm (1b) of the angle-shaped frame (1), the first transmitter (2) with the first two receivers (4, 5) being used for scanning the longitudinally extending nap edge (13) of the napless zone (2), the second transmitter (3) with the third receiver (6) being used for scanning the edges of the napless zone (12) transversely of the fabric web (7).

2. A device according to claim 1, **characterised in that** the frame (1) consists of two arms (1c) rigidly interconnected at substantially right angles and can be pivoted around an axis (16) extending through the connecting place of the two arms (1c) parallel with the axis of the deflecting roller (11), the two first and second arms (1a, 1b) being attached cantilevered at the free ends of the two arms (1c).

3. A device according to claims 1 or 2, **characterised in that** the means for adjusting the distance between the frame (1) and the deflecting roller (11) and the foundation fabric and therefore for adjusting the sensitivity of the arrangement consist of an adjusting device operative in the direction of the axis of the deflecting roller (11).

4. A device according to one of claims 1 to 3, **characterised in that** the first transmitter (2) delivers a fan-shaped signal which, in dependence on the position of the nap edge (13) of the napless zone (9) along the fabric web (7), impinges on solely the first receiver (4), on the first two receivers (4) and (5) together, or on none of the first two receivers (4, 5).

5. A device according to claim 4, **characterised in that** the three possible signals can be evaluated in a control system acting upon a control member of the textile machine.

6. A device according to one of claims 1 to 5, **characterised in that** the second transmitter (3) and the third receiver (6) are in contact with one another in the zone of the napless area (12) and thereby switch off the scanning of the nap edge (13).

## Revendications

1. Dispositif pour l'exploration latérale de zones sans poils sur des bandes de tissu, en particulier en tissu éponge, dans une machine textile, dans lequel la bande de tissu (7) passe autour d'un rouleau de renvoi (11) dans la région du dispositif d'exploration, dans lequel l'exploration des zones sans poils (9, 12) de la bande de tissu (7) a lieu au moyen de détecteurs photoélectriques (2 à 6) constitués par un émetteur et par un récepteur et fixés sur un cadre (1) en forme d'angle qui est suspendu d'une manière pivotante et qui comporte des moyens pour régler sa distance par rapport au rouleau de renvoi (11) ou, respectivement, au tissu de base de la zone sans poils (9, 12), et dans lequel les rayons d'exploration sont dirigés tangentiellement par rapport au rouleau de renvoi (11), et donc à la bande de tissu (7) à l'endroit où celle-ci est déviée, caractérisé par le fait que deux émetteurs (2, 3) sont disposés sur une première aile (1a) du cadre (1) en forme d'angle, et que trois récepteurs (4, 5, 6) sont disposés sur une autre aile, ou deuxième aile, (1b), du cadre (1) en forme d'angle, cependant que le premier émetteur (2) sert, avec les deux premiers récepteurs (4, 5), à explorer la limite des poils (13) en défilement longitudinal au bord de la zone sans poils (9), et que le deuxième émetteur (3) sert, avec le troisième récepteur (6), à explorer les bords de la zone sans poils (12) qui est transversale par rapport à la bande de tissu (7).

2. Dispositif selon la revendication 1, caractérisé par le fait que le cadre (1) est constitué par deux branches (1c) qui sont reliées rigidement entre elles et qui sont à peu près perpendiculaires, et qu'il peut pivoter autour d'un axe (16) qui passe par l'endroit de rencontre des deux branches (1c) et qui s'étend parallèlement à l'axe du rouleau de renvoi (11), et par le fait que la première aile et la deuxième aile (1a, 1b) sont toutes deux fixées en porte-à-faux sur les extrémités libres des deux branches (1c).

3. Dispositif selon la revendication 1 ou 2, caractérisé par le fait que les moyens pour régler la distance du cadre (1) par rapport au rouleau de renvoi (11) ou, respectivement, au tissu de base, et donc pour régler la sensibilité de l'installation, sont constitués par un dispositif d'avance agissant dans la direction de l'axe du rouleau de renvoi (11).

4. Dispositif selon l'une des revendications 1 à 3, caractérisé par le fait que le premier émetteur (2) émet un signal en forme d'éventail qui, selon la position de la limite (13) des poils au bord de la zone sans poils (9) le long de la bande de tissu (7), rencontre le premier récepteur (4) seul, les deux premiers récepteurs (4) et (5) à la fois ou aucun des deux premiers récepteurs (4, 5).

5. Dispositif selon la revendication 4, caractérisé par le fait que les trois signaux possibles peuvent être exploités dans une commande qui alimente un organe de réglage de la machine textile.

6. Dispositif selon l'une des revendications 1 à 5, caractérisé par le fait que le deuxième émetteur (3) et le troisième récepteur (6) sont en contact l'un avec l'autre dans la région de la zone sans poils (12), et qu'ils arrêtent alors l'exploration de la limite (13) des poils.
